# EUROPÄISCHE PATENTSCHRIFT

(11) **EP 0 736 183 B1**
(45) Veröffentlichungstag und Bekanntmachung des Hinweises auf die Patenterteilung: **31.07.2002**
(21) Anmeldenummer: 95905092.3
(22) Anmeldetag: 20.12.1994
(51) Int. Cl.: G01P 3/487

(54) **VORRICHTUNG ZUR ERFASSUNG VON DREH- ODER WINKELBEWEGUNGEN**
DEVICE FOR DETECTING ROTARY OR ANGULAR MOVEMENTS
DISPOSITIF DE DETECTION DE MOUVEMENTS ROTATIFS ET ANGULAIRES

(30) Priorität: 22.12.1993 DE 4343828
(43) Veröffentlichungstag der Anmeldung: 09.10.1996
(73) Patentinhaber: Continental Teves AG & Co. oHG, 60488 Frankfurt (DE)
(72) Erfinder: LOHBERG, Peter, D-61381 Friedrichsdorf (DE)
(86) Internationale Anmeldenummer: EP9404242
(87) Internationale Veröffentlichungsnummer: WO9517680

(56) Entgegenhaltungen:
- GB-A- 2 071 333
- US-A- 4 319 188
- Patent Abstracts of Japan, Band 7, Nr 212(P-224); & JP,A,58106462 (MATSUSHITA DENKI SANGYO K.K.), 1983-06-24
- Patent Abstracts of Japan, Band 8, Nr 109(P-275); & JP,A,5919810 (MATSUSHITA DENKI SANGYO K.K.), 1984-02-01
- Derwent's abstract, Nr. 92-322587/39, Woche 9239; & SU,A,1689859, (AS BELO SOLID BODY PHYS INST VITEB), 1991-11-07
- Patent Abstracts of Japan, Band 9, Nr 195(P-379); & JP,A,6061661 (SONY K.K.), 1985-04-09

## Beschreibung

Die Erfindung bezieht sich auf einen zur Erfassung von Drehoder Winkelbewegungen dienenden Kraftfahrzeugradsensor nach dem Oberbegriff des Patentanspruchs 1.

Derartige Vorrichtungen werden in der Kraftfahrzeugindustie zum Erfassen des Drehverhaltens der einzelnen Fahrzeugräder benötigt. Die Radgeschwindigkeit ist als Eingangsgröße für Regelungssysteme, wie Antiblockiersysteme, Antriebsschlupfund Fahrstabilitätsregelungen usw., von ausschlaggebender Bedeutung.

Sensorische Vorrichtungen zur Erfassung von Raddrehzahlen sind in vielfältiger Ausführungsart bekannt. Sie besitzen in der Regel als Meßwertgeber einen inkrementalen Encoder, der mechanisch mit dem Teil oder Rad, dessen Drehbewegung gemessen werden soll, verbunden ist, sowie einen Meßwertaufnehmer bzw. Sensor, der diesen Encoder abtastet. Als Encoder werden ferromagnetische Zahnräder, Zahnringe, ferromagnetische Lochscheiben usw. verwendet. Zur Anwendung in Radlagern ist es auch bekannt, magnetisierte Strukturen als Meßwertgeber zu verwenden, z. B. ring- oder kreisförmige Anordnungen aufeinanderfolgender Nord/Südpole, eingebettet in einen mechanischen Träger.

Die gegenwärtig größte Verbreitung haben sogenannte "passive" Sensoren nach dem Reluktanzprinzip. Diese Sensoren haben als Meßwertaufnehmer eine Kupferspule mit einem Permanentmagneten. Der Meßwertaufnehmer ist magnetisch an die als Meßwertgeber dienende Zahnscheibe oder an einen anderen Encoder gekoppelt. Der Encoder moduliert bewegungssynchron die magnetische Koppelreluktanz, wobei in der Kupferspule eine die Bewegung darstellende Wechselspannung induziert wird, deren Frequenz sich als Meßgröße zur Ermittlung der Raddrehzahl auswerten läßt. Die Höhe der induzierten Signalspannung ist abhängig von der Drehgeschwindigkeit und von dem Luftspalt zwischen Meßwertgeber und dem Meßwertaufnehmer bzw. zwischen der Verzahnung und dem Sensor.

Es sind auch bereits "aktive" Sensoren bekannt, zu denen auch der Gegenstand der vorliegenden Erfindung zählt. Sie bestehen im Prinzip aus der Kombination eines magnetostatisch empfindlichen Elementes mit einem Permanentmagneten, der magnetisch an den Encoder gekoppelt ist. Der Encoder moduliert auch hierbei bewegungssynchron die magnetische Koppelreluktanz oder die Feldrichtung, wobei das Sensorelement auf die Änderung der Flußdichte oder auf die Bewegung eines Feldvektors anspricht. Bekannte Beispiele solcher magnetostatisch empfindlicher Elemente sind Hall-Sonden und magnetoresistive Strukturen auf der Basis von Permalloy-Legierungen. Die Höhe der Signalspannung am Sensorelement ist abhängig vom Luftspalt, jedoch unabhängig von der Drehzahl bzw. Frequenz.

Aus dem Aufsatz "Magnetoresistiver Drehzahlsensor - zuverlässig und preiswert" (Graeger, Petersen; Elektronik 24/1992, Seiten 48 bis 52) ist bereits ein solcher gattungsgemässer aktiver Drehzahlsensor bekannt, der mit einer als Meßwertgeber dienenden Zahnscheibe aus ferromagnetischem Material zusammenwirkt. Das eigentliche Sensorelement ist auf der Seite, die der Zahnscheibe abgewandt ist, mit einem Permanentmagneten versehen. Das Magnetfeld dieses Magneten dient zur Vorspannung des magnetoresistiven Sensorelementes und zur Erzeugung der magnetischen Koppelreluktanz mit dem umlaufenden Zahnrad. Es ist daher ein Permanentmagent mit relativ großem Volumen erforderlich, um einen in der Praxis ausreichenden Luftspalt zulassen zu können.

Aus der japanischen Offenlegungsschrift JP-A-59 19810 ist ein aktiver Sensor zur Ermittlung von Rotationswinkeln bekannt,bei dem mittels eines magnetoresistiven Elementes, eines Vorspannmagneten für dieses Element und an einem Rotor befindlicher permanentmagnetischer Areale Winkelbewegungen gemessen werden. Der Vorspannmagnet dient zur Vermeidung von Störeinflüssen anderer magnetischer Quellen und ist zusammen mit Sensorelementen auf einem elektrisch isolierenden Substrat angeordnet.

Die britische Patentanmeldung GB-A-2 071 333 offenbart eine Sensorvorrichtung zur Messung von Winkelpositionen von Wellen in Werkzeugmaschinen, mit einem magnetoresistiven Element, einem Vorspannmagneten und an der Welle befindlicher permanentmagnetischer Areale. Das magnetoresistive Element weist zwei zueinander orthogonale magnetische Vorzugsrichtungen bezüglich wirksamer Magnetfeldkomponenten auf, wobei eine Magnetfeldkomponente durch den Vorspannmagneten und die andere durch die permanentmagnetischen Areale am Meßwertgeber hervorgerufen wird.

Der vorliegenden Erfindung liegt die Aufgabe zugrunde, einen Kraftfahrzeugradsensor der eingangs genannten Art mit einem aktiven Sensorelement zu entwickeln, der sich im Vergleich zu bekannten Kraftfahrzeugradsensoren durch ein möglichst kleines Bauvolumen auszeichnet, um die Vorrichtung zum Beispiel auch in einem Radlager eines Automobils unterbringen zu können, und der außerdem einen möglichst großen Luftspalt bzw. Abstand zwischen Meßwertgeber und Meßwertaufnehmer zuläßt.

Es hat sich herausgestellt, daß diese Aufgabe mit dem im beigefügten Anspruch 1 beschriebenen Kraftfahrzeugradsensor gelöst werden kann. Das Besondere der erfindungsgemäßen Vorrichtung wird darin gesehen, daß der Meßwertgeber in Drehrichtung mit wechselnder Polarität aufeinanderfolgende, permanentmagnetische Areale aufweist und daß das Sensorelement derart angeordnet und der Vorspannmagnet derart magnetisiert ist, daß der Vorspannmagnet eine Feldkomponente erzeugt, die senkrecht zu der Bewegungsrichtung des Meßwertgebers in einer Vorzugsrichtung des Sensorelementes verläuft und daß bei einer Drehbewegung die magnetischen Areale in einer Vorzugsrichtung des Sensorelementes, die zu der von dem Vorspannmagneten erzeugten Magnetfeldkomponenten orthogonal ist, einen veränderlichen Feldstärkeverlauf zwischen den benachbarbarten permanentmagnetischen Arealen hervorrufen, der das Sensorelement in Drehrichtung durchdringt und die Drehbewegung wiedergibt.

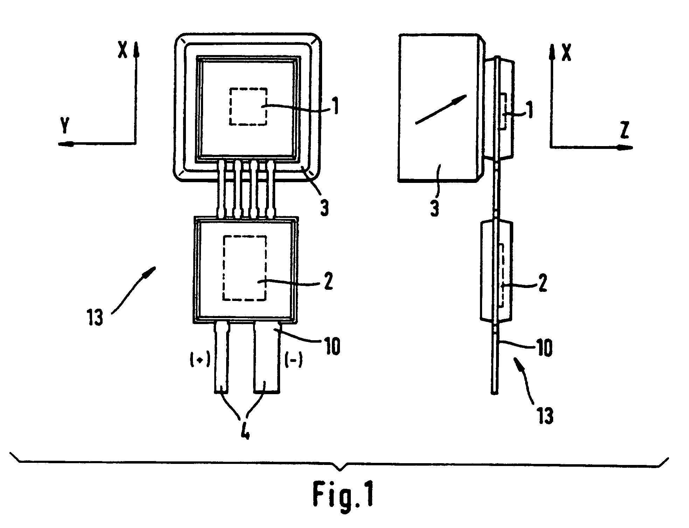

Erfindungsgemäß wird ein magnetoresistives Sensorelement verwendet, weil bekannt ist, daß dieses unter vergleichbaren Bedingungen größere Luftspalte zwischen Encoder und Sensor im Vergleich zu Hall-Elementen zuläßt. Das in dem zuvor zitierten Aufsatz (Elektronik 24/1992) zitierte Sensorelement KMI 10/1 ist ein Beispiel eines solchen aktiven Drehzahlsensorelementes. Dieses Sensorelement ist zur Verwendung in Verbindung mit einem Encoder aus ferromagnetischem Material bestimmt. Wie die beigefügte Fig. 1 zeigt, besteht der Sensor aus einer magnetoresistiven Widerstandsbrücke 1, einem elektronischen Auswerteschaltkreis 2 sowie aus einem Permanentmagneten 3, der in Richtung der XZ-Ebene magnetisiert ist. Der Sensor wird zu seinem Betrieb magnetisch über einen geringen Luftspalt an ein Zahnrad aus ferromagnetischem Material gekoppelt. Die Zahnbreiten sind in X-Richtung (siehe Fig. 1) orientiert und bewegen sich bei Drehung des Zahnrades in Y-Richtung an der dem Permanentmagneten 3 gegenüberliegenden Seite der Brücke vorbei, die aus den magnetoresistiven Widerständen besteht. Dadurch wird das Magnetfeld der XZ-Ebene wechselweise zusätzlich in Y-Richtung verformt. Die magnetoresistive Brücke ist so aufgebaut und angeordnet, daß sie auf die Feldstärkekomponente in Y-Richtung durch Verstimmung reagiert. Die elektronische Auswerteschaltung 2 besteht im wesentlichen aus einem Brückensignalverstärker mit nachfolgender Triggerschaltung, die im Bereich des Nennluftspaltes, unabhängig von der Größe des Luftspaltes, ein binäres Ausgangssignal mit zwei konstanten Amplitudenwerten erzeugt, deren Flankenwechsel die Teilung des Meßwertgeber-Zahnrades abbilden. Der Auswerteschaltkreis ist so ausgelegt, daß das Signal in Form eines Stromes über Anschlüsse 4 ausgegeben wird. Sowohl das sensorische Element als auch die signalverarbeitende Schaltung sind als integrierte Schaltungen ausgebildet und jeweils in ein Plastikgehäuse eingekapselt.

Mit Hilfe einer Trägerstruktur 10 sind die beiden Gehäuse mechanisch miteinander verbunden. Die Trägerkonstruktion 10 stellt zugleich die elektrisch leitenden Verbindungen her.

Die erfindungsgemäße Vorrichtung beruht auf der Erkenntnis, daß sich gewissermaßen durch eine Aufteilung der magnetischen Struktur in einen Vorspannmagneten, der ein Magnetfeld in X-Richtung erzeugt, nämlich in einer der magnetischen Vorzugsrichtungen des magnetoresistiven Sensorelementes, die orthogonal zu der Bewegungsrichtung des Encoders (Y-Richtung) verläuft, und in die permanentmagnetische Areale eines Meßwertgebers die gewünschte Verringerung des Bauvolumens und gleichzeitig ein höherer zulässiger Luftspalt erreichen läßt.

Nach einer vorteilhaften Ausführungsart der erfindungsgemäßen Vorrichtung ist der Meßwertgeber in Form einer die Drehbewegung ausführenden Scheibe ausgebildet, an deren Peripherie die permanentmagnetischen Areale gleichmäßig verteilt angeordnet sind. Diese permanentmagnetischen Areale sind zweckmäßigerweise in der Drehebene der Scheibe oder am Umfang der Scheibe in ein mechanisches Trägermaterial eingebettet oder durch Magnetisieren von Arealen hergestellt. Je nach Anordnung der Areale wird der Meßwertaufnehmer parallel zur Scheibe oder achsparallel ausgerichtet.

In den Unteransprüchen sind noch weitere vorteilhafte Ausführungsformen der Erfindung beschrieben. So kann zum Beispiel der Meßwertaufnehmer in Form eines eingehäusigen oder eines zweigehäusigen Grundelementes ausgebildet sein, wobei der Vorspannmagnet entweder auf dem Gehäuse, und zwar auf der dem Encoder abgewandten Seite, angeordnet oder in das Gehäuse eingebettet werden kann.

Weitere Einzelheiten der Erfindung gehen aus der folgenden Beschreibung von Ausführungsbeispielen anhand der beigefügten Abbildungen hervor.

Es zeigen:
- Fig. 1: in Draufsicht und in Seitenansicht den prinzipiellen Aufbau des zuvor beschriebenen, bereits bekannten Meßwertaufnehmers mit einem aktiven Sensorelement,
- Fig. 2: in perspektivischer Darstellungsweise, schematisch vereinfacht den äußeren Aufbau eines Ausführungsbeispiels eines Meßwertaufnehmers der Vorrichtung nach der Erfindung,
- Fig. 3: in gleicher Darstellungsweise wie Fig. 2, jedoch zusammen mit einem Encoder eine weitere Ausführungsart der Vorrichtung nach der Erfindung,
- Fig. 4: im Querschnitt, schematisch den prinzipiellen Aufbau eines Ausführungsbeispiels des Meßwertaufnehmers nach Fig. 2,
- Fig. 5: in gleicher Darstellungsweise wie Fig. 4 eine alternative Ausführungsart des Meßwertaufnehmers nach der Erfindung, und
- Fig. 6: in schematischer Teildarstellung und im Schnitt die Anordnung eines Meßwertaufnehmers relativ zu einem Meßwertgeber bei einer bekannten (a) und bei einer erfindungsgemäßen (b) Meßvorrichtung.

Der bekannte, in Fig. 1 dargestellte Meßwertaufnehmer wurde bereits erläutert.

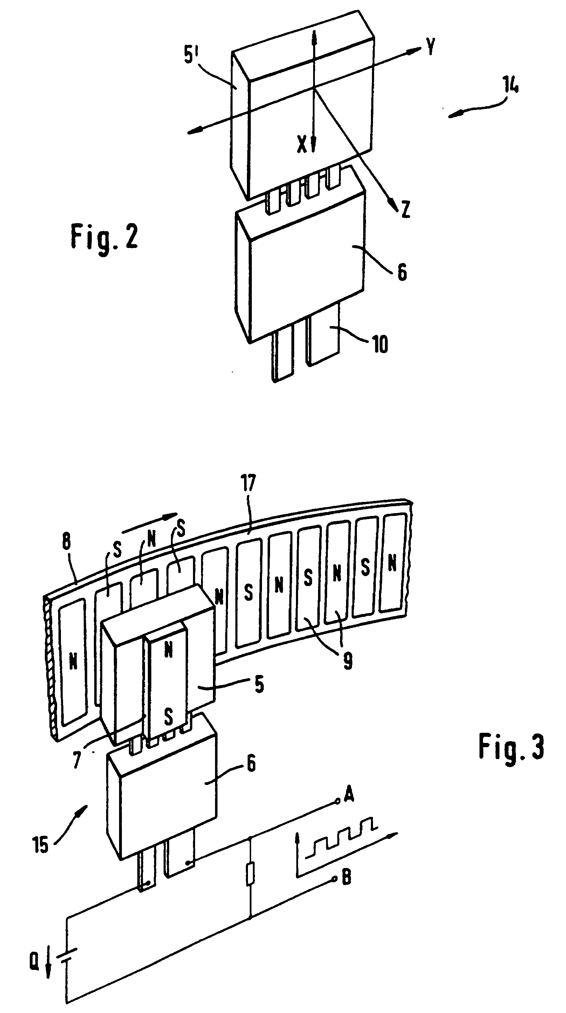

Fig. 2 zeigt dagegen einen Meßwertaufnehmer 14 für eine Vorrichtung der erfindungsgemäßen Art. Es handelt sich bei diesem Ausführungsbeispiel um einen zweigehäusigen Meßwertaufnehmer, bei dem ein magnetoresistives Sensorelement und ein im Vergleich zum Stand der Technik sehr kleinvolumiger Vorspannmagnet in dem einen Sensorgehäuse 5' und eine Auswerteschaltung, die vorzugsweise durch einen integrierten Schaltkreis realisiert wird, in einem IC-Gehäuse 6 untergebracht sind. Das Ganze befindet sich auf einer gemeinsamen Trägerkonstruktur 10, ähnlich der Trägerstruktur nach Fig. 1. Die Bezugsrichtungen X, Y, Z, die hier zur weiteren Erläuterung der Erfindung benutzt werden, sind in Fig. 2 eingetragen. "Y" ist die Bewegungsrichtung oder Drehrichtung des zugehörigen Encoders (vergleiche Fig. 3), "X" die zu "Y" orthogonale magnetische Vorzugsrichtung des Sensorelementes 1, welche die Polarisierungsrichtung des Vorspannmagnetes (7, 11; siehe Fig. 3 - 5) definiert. Schließlich ist "Z" die dritte Bezugsrichtung des hier verwendeten Koordinatensystems.

Fig. 3 veranschaulicht die gegenseitige Anordnung des Meßwertaufnehmers 15 und des zugehörigen Meßwertgebers 8 nach der Erfindung. In dieser Ausführungsart ist - im Gegensatz zur Ausführungsart nach Fig. 2 - der Vorspannmagnet 7, der in X-Richtung polarisiert ist, außerhalb des Sensorgehäuses 5 angeordnet. In dem Sensorgehäuse 5 befindet sich das hier nicht dargestellte Sensorelement (1).

Als Meßwertgeber wird erfindungsgemäß, wie Fig. 3 zeigt, ein magnetischer Encoder 8 verwendet. Dieser besteht hier aus einer Scheibe, an deren Peripherie in der Drehebene eine Vielzahl von permanentmagnetischen Arealen 9 in gleichmäßigem Abstand und gleichmäßig verteilt angeordnet sind. Diese magnetisierten oder in ein Trägermaterial 17 eingebeteten Areale 9 bilden in Laufrichtung bzw. Y-Richtung abwechselnd aufeinanderfolgende Nord-/Südpole N/S. Wird die erfindungsgemäße Vorrichtung in Form eines Lagersensors ausgebildet, dient zweckmäßigerweise ein entsprechend der Darstellung in Fig. 3 magnetisierter Radlagerdichtring als Encoder.

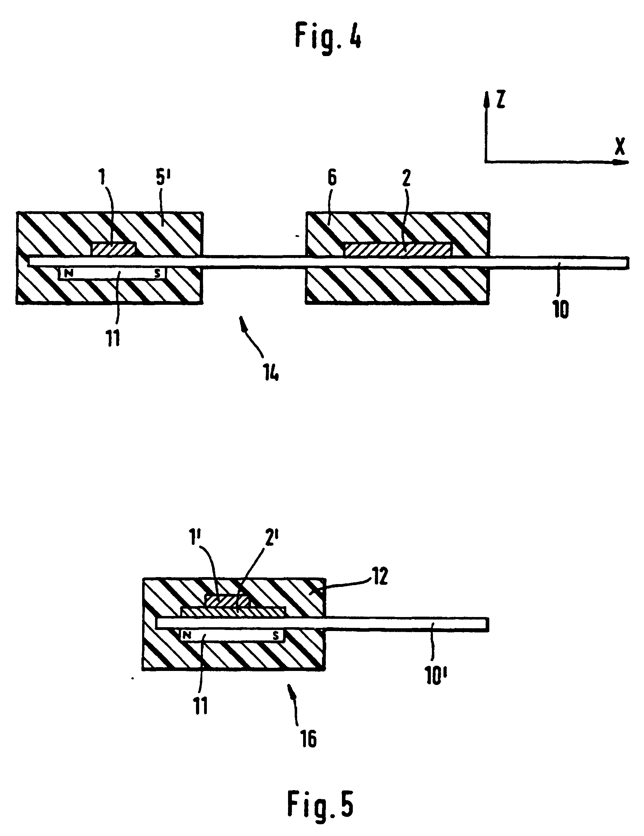

Wird der magnetische Encoder 8 des Ausführungsbeispiels nach Fig. 3 in Y-Richtung bewegt, entsteht an den Klemmen A/B eine elektrische Signalspannung, deren Frequenz durch die Abfolge der Polwechsel Nord-/Südpol bestimmt wird. Da es sich hier um einen aktiven Sensor handelt, wird eine elektrische Energiequelle benötigt, die hier durch die Quelle Q symbolisiert ist. Fig. 4 zeigt in schematischer Darstellung den inneren Aufbau des in Fig. 2 perspektivisch dargestellten Meßwertaufnehmers. Auf der Trägerstruktur 10 sitzt ein zweigehäusiges Grundelement. Das Gehäuseteil 5' enthält das magnetoresistive Sensorelement 1 und den Vorspannmagneten 11. Der Vorspannmagnet 11 ist in X-Richtung magnetisiert und befindet sich auf der vom magnetisierten Encoder 8 - siehe Fig. 3 - abgewandten Seite. Das Sensorelement 1 ist also zwischen dem Vorspannmagneten 11 und den magnetischen Arealen 9 des Encoders bzw. Meßwertgebers 8 angeordnet. In dem zweiten Gehäuseteil 6 ist die Auswerteschaltung 2 untergebracht.

Der Meßwertaufnehmer nach Fig. 5 unterscheidet sich von dem Ausführungsbeispiel nach Fig. 4 durch die Plazierung der Auswerteschaltung 2'. Diese elektronische Schaltung ist in diesem Beispiel zwischen dem Sensorelement 1' und dem Vorspannmagneten 11 untergebracht. Die Trägerstruktur 10', die auch die elektrischen Anschlüsse enthält, befindet sich zwischen der Schaltung 2' und dem Vorspannmagneten 11. Es sind noch andere Anordnungen möglich. Wichtig ist vor allem, daß das permanentmagnetische Feld des Vorspannmagneten 11 in der X-Richtung das Sensorelement 1' durchdringt und daß - hier nicht gezeigt - das Sensorelement 1' in Y-Richtung dem Magnetfeld der magnetischen Areale 9 des Encoders 8 ausgesetzt ist.

Die äußere Gestaltung des Vorspannmagneten 11 sind nicht auf eine bestimmte Körperform beschränkt. Wichtig ist allein die Vormagnetisierung in X-Richtung. Die Körperform kann dann mit Rücksicht auf die Herstellungsweise oder auf den Einbau des Meßwertaufnehmers gewählt werden. Der Vorspannmagnet 11 benötigt nur geringes Volumen, weil sein Feld lediglich das Sensorelement 1,1' durchdringen muß, nicht jedoch den Luftspalt bis zum Meßwertgeber 8 zu überbrücken braucht.

Ein wesentlicher Vorteil der erfindungsgemäßen Meßvorrichtung im Vergleich zu den bekannten Vorrichtungen mit aktivem Sensorelement und ferromagnetischem Meßwertgeber besteht in der Verringerung des benötigten Bauvolumens. Durch diese Volumenverringerung wird es in der Praxis erst möglich, nach diesem Prinzip einen Radlagersensor aufzubauen.

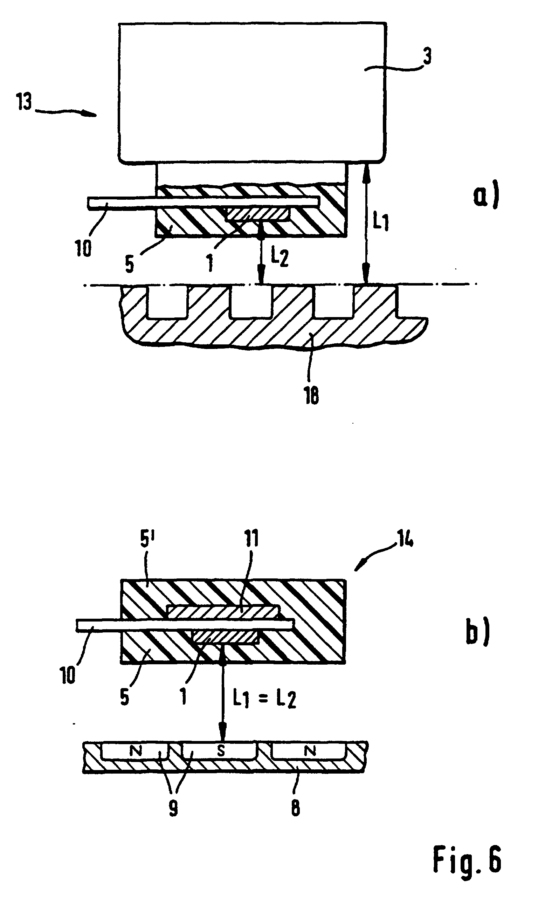

Fig. 6 veranschaulicht die Unterschiede zwischen dem Stand der Technik und der Erfindung. Während nach Fig. 6a nach dem bekannten Prinzip ein großvolumiger Permanentmagnet 3 benötigt wird, dessen Magnetfeld in Z-Richtung über einen Luftspalt L₁ hinweg bis zu dem ferromagnetischen Meßwertgeber 18 reichen muß, genügt nach Fig. 6b, welche die erfindungsgemäße Anordnung zeigt, ein sehr viel kleinerer Vorspannmagnet 11. In der Praxis hat sich gezeigt, daß für die erfindungsgemäße Vorrichtung ein etwa um den Faktor 100 verkleinerter Permanentmagnet genügt.

Der zulässige Luftspalt zwischen dem Sensorelement 1 und der Oberfläche des magnetisierten Encoders 8 kann bei der erfindungsgemäßen Vorrichtung wesentlich größer werden als bei der bekannten Drehzahlmeßvorrichtung nach Fig. 6a.

Der Permanentmagnet 3 der bekannten Vorrichtung muß also ein Magentfeld über die Distanz L₁ aufbauen, wobei lediglich der Abstand L₂ - bei Vernachlässigung des Gehäuses, in das das Sensorelement 1 eingefügt ist - als Luftspalt zur Verfügung steht. Bei der erfindungsgemäßen Vorrichtung gilt dagegen L₁ = L₂.

## Patentansprüche

1. Kraftfahrzeugradsensor zur Erfassung von Dreh- oder Winkelbewegungen einzelner Fahrzeugräder als Eingangsgröße geregelter Kraftfahrzeugbremssysteme, bestehend aus einem Meßwertgeber (8), der mit dem die Dreh- oder Winkelbewegung ausführenden Teil umläuft, und aus einem stationären, mit dem Meßwertgeber (8) über einen Luftspalt (L₁, L₂) magnetisch gekoppelten Meßwertaufnehmer (14, 15, 16), der ein magnetoresistives Sensorelement (1, 1') mit einem Vorspannmagneten (7, 11) und eine elektronische Auswerteschaltung (2, 2') umfaßt, wobei das Sensorelement (1, 1') und die Auswerteschaltung (2, 2') auf einer zumindest teilweise elektrisch leitfähigen Trägerstruktur (10, 10') angeordnet sind, wobei das magnetoresistive Sensorelement (1, 1') zwei zueinander orthogonale magnetische Vorzugsrichtungen (X, Y) besitzt und wobei in einer Vorzugsrichtung durch den Vorspannmagneten (7, 11) eine permanente Magnetfeldkomponente hervorgerufen wird, **dadurch gekennzeichnet, daß** der Meßwertgeber (8) permanentmagnetische, in Drehrichtung (Y-Richtung) mit wechselnder Polarität (N/S) aufeinanderfolgende Areale (9) aufweist sowie daß das Sensorelement (1, 1') derart angeordnet und der Vorspannmagnet (7, 11) derart magnetisiert ist, daß der Vorspannmagnet (7, 11) ein Magnetfeld erzeugt, welches senkrecht zu der Bewegungsrichtung (Y-Richtung) des Meßwertgebers (8) in einer Vorzugsrichtung (X-Richtung) des Sensorelementes (1, 1') orientiert ist, und daß bei einer Drehbewegung des Meßwertgebers (8) die magnetischen Areale (9) in einer Vorzugsrichtung des Sensorelementes (Y-Richtung), die zu der von dem Vorspannmagneten (7, 11) erzeugten Magnetfeldkomponenten im wesentlichen orthogonal ist, einen veränderlichen Feldstärkeverlauf zwischen den benachbarten permanentmagnetischen Arealen (9) hervorrufen, der das Sensorelement (1, 1') in Drehrichtung (Y-Richtung) durchdringt und die Drehbewegung wiedergibt.

2. Kraftfahrzeugradsensor nach Anspruch 1, **dadurch gekennzeichnet, daß** der Meßwertgeber (8) in Form einer Scheibe ausgebildet ist, an deren Peripherie die permanentmagnetischen Areale (9) gleichmäßig verteilt angeordnet sind.

3. Kraftfahrzeugradsensor nach Anspruch 2, **dadurch gekennzeichnet, daß** die permanentmagnetischen Areale (9) in der Drehebene der Scheibe angeordnet und der Meßwertaufnehmer (14, 15, 16) parallel zur Scheibe ausgerichtet sind.

4. Kraftfahrzeugradsensor nach Anspruch 2, **dadurch gekennzeichnet, daß** die permanentmagnetischen Areale (9) am Umfang der Scheibe angeordnet und der Meßwertaufnehmer an der Peripherie achsparallel ausgerichtet ist.

5. Kraftfahrzeugradsensor nach einem oder mehreren der Ansprüche 1 bis 4, **dadurch gekennzeichnet, daß** die permanentmagnetischen Areale (9) durch Einbetten von magnetischen Körpern in ein mechanisches Trägermaterial (17) oder durch Magnetisieren von Arealen (9) eines Trägers hergestellt sind.

6. Kraftfahrzeugradsensor nach einem der Ansprüche 1 bis 5, **dadurch gekennzeichnet, daß** der Meßwertaufnehmer (14, 15) in Form eines zweigehäusigen Grundelementes ausgebildet ist und daß der zur Erzeugung der Feldkomponente in X-Richtung dienende vorspannmagnet (7) außerhalb eines Gehäuses (5) des magnetoresistiven Sensorelementes (1) angeordnet ist.

7. Kraftfahrzeugradsensor nach einem oder mehreren der Ansprüche 1 bis 5, **dadurch gekennzeichnet, daß** der Meßwertaufnehmer (16) in Form eines eingehäusigen Grundelementes ausgebildet ist und daß der Vorspannmagnet außerhalb des Gehäuses auf der dem Meßwertgeber (8) abgewandten Seite dieses Gehäuses angeordnet ist.

8. Kraftfahrzeugradsensor nach einem oder mehreren der Ansprüche 1 bis 5, **dadurch gekennzeichnet, daß** der Meßwertaufnehmer (14) in Form eines zweigehäusigen Grundelementes ausgebildet ist und daß der Vorspannmagnet (11) innerhalb des Gehäuses (5') des magnetoresistiven Sensorelementes (1) angeordnet ist.

9. Kraftfahrzeugradsensor nach einem oder mehreren der Ansprüche 1 bis 5, **dadurch gekennzeichnet, daß** der Meßwertaufnehmer (16) in Form eines eingehäusigen Grundelementes (12) ausgebildet ist und daß der Vorspannmagnet (11) innerhalb des Grundelementes (12) angeordnet ist.

10. Kraftfahrzeugradsensor nach einem oder mehreren der Ansprüche 1 bis 9, **dadurch gekennzeichnet, daß** der zur Erzeugung der Feldkomponente in X-Richtung dienende Vorspannmagnet (7, 11) innerhalb oder außerhalb des Gehäuses relativ zu dem magnetoresistiven Sensorelement (1, 1') auf der dem Meßwertgeber (8) abgewandten Seite angeordnet ist.

11. Kraftfahrzeugradsensor nach einem oder mehreren der Ansprüche 1 bis 10, **dadurch gekennzeichnet, daß** diese in Form eines Radlagersensors ausgebildet ist.

12. Kraftfahrzeugradsensor nach Anspruch 11, **dadurch gekennzeichnet, daß** der Meßwertgeber (8) durch Einlagerung von permanentmagnetischen Arealen (9) in einen Radlagerdichtring oder durch Aufmagnetisierung entsprechender Areale (9) hergestellt ist.

## Claims

1. Automotive vehicle wheel sensor for detecting rotary or angular movements of individual vehicle wheels as an input quantity of controlled automotive vehicle brake systems, comprised of a measuring data emitter (8) which co-rotates with the part executing the rotary or angular movement, and a stationary transducer (14, 15, 16) which is magnetically coupled to the measuring data emitter (8) by way of an air slot (L₁, L₂) and comprises a magneto-resistive sensor element (1, 1') with a bias magnet (7, 11) and an electronic evaluating circuit (2, 2'), wherein the sensor element (1, 1') and the evaluating circuit (2, 2') are arranged on a carrier member system (10, 10') that is electrically conductive at least in part, wherein the magneto-resistive sensor element (1, 1') has two orthogonal preferred magnetic directions (X, Y), and wherein a permanent magnetic field component is produced by the bias magnet (7, 11) in one preferred direction,
**characterized in that** the measuring data emitter (8) has successive permanent magnet areas (9) of alternating polarity (N/S) in the direction of rotation (Y direction), and **in that** the sensor element (1, 1') is arranged and the bias magnet (7, 11) is magnetized such that the bias magnet (7, 11) produces a magnetic field which extends vertically to the direction of movement (Y direction) of the measuring data emitter (8) in a preferred direction (X direction) of the sensor element (1, 1'), and **in that** during rotary movement of the measuring data emitter (8), in a preferred direction of the sensor element (Y direction) which is generally orthogonal to the magnetic field component produced by the bias magnet (7, 11), the magnet areas (9) cause a varying course of field strength between the adjacent permanent magnet areas (9) which passes through the sensor element (1, 1') in the direction of rotation (Y direction) and represents the rotary movement.

2. Automotive vehicle wheel sensor as claimed in claim 1,
**characterized in that** the measuring data emitter (8) takes the shape of a disc, and the permanent magnet areas (9) are distributed evenly over the periphery of the said disc.

3. Automotive vehicle wheel sensor as claimed in claim 2,
**characterized in that** the permanent magnet areas (9) are arranged in the rotational plane of the disc, and the transducer (14, 15, 16) is aligned in parallel to the disc.

4. Automotive vehicle wheel sensor as claimed in claim 2,
**characterized in that** the permanent magnet areas (9) are arranged over the periphery of the disc, and the transducer is aligned paraxially at the periphery.

5. Automotive vehicle wheel sensor as claimed in any one or more of claims 1 to 4,
**characterized in that** the permanent magnet areas (9) are provided by embedding magnetic members in a mechanic carrier material (17) or by magnetizing areas (9) of a carrier.

6. Automotive vehicle wheel sensor as claimed in any of claims 1 to 5,
**characterized in that** the transducer (14, 15) is configured as a two-housing basic element, and **in that** the bias magnet (7) which serves to produce the field component in the X direction is arranged outside the housing (5) of the magneto-resistive sensor element (1).

7. Automotive vehicle wheel sensor as claimed in any one or more of claims 1 to 5,
**characterized in that** the transducer (16) is configured as a one-housing basic element, and **in that** the bias magnet is arranged outside the housing on the side of the housing remote from the measuring data emitter (8).

8. Automotive vehicle wheel sensor as claimed in any one or more of claims 1 to 5,
**characterized in that** the transducer (14) is configured as a two-housing basic element, and **in that** the bias magnet (11) is arranged inside the housing (5') of the magneto-resistive sensor element (1).

9. Automotive vehicle wheel sensor as claimed in any one or more of claims 1 to 5,
**characterized in that** the transducer (16) is configured as a one-housing basic element (12), and **in that** the bias magnet (11) is arranged inside the basic element (12).

10. Automotive vehicle wheel sensor as claimed in any one or more of claims 1 to 9,
**characterized in that** the bias magnet (7, 11), which serves to produce the field component in the X direction, is arranged inside or outside the housing relative to the magneto-resistive sensor element (1, 1') on the side remote from the measuring data emitter (8).

11. Automotive vehicle wheel sensor as claimed in any one or more of claims 1 to 10,
**characterized in that** the sensor is configured as a wheel bearing sensor.

12. Automotive vehicle wheel sensor as claimed in claim 11,
**characterized in that** the measuring data emitter (8) is provided by incorporating permanent magnet areas (9) in a wheel bearing sealing ring or by magnetization of corresponding areas (9) thereon.

## Revendications

1. Capteur pour roue d'un véhicule automobile, pour la détection de mouvements de rotation ou angulaires de roues individuelles du véhicule en tant que grandeur d'entrée de systèmes de freinage régulés du véhicule automobile, constitué d'un transducteur de valeur de mesure (8) qui tourne avec l'élément exécutant le mouvement de rotation ou le mouvement angulaire, et d'un capteur de valeur de mesure (14, 15, 16) fixe, accouplé magnétiquement au transducteur de valeur de mesure (8), par un entrefer (L₁, L₂), lequel capteur comprend un élément de capteur (1, 1') magnétorésistif avec un aimant de précontrainte (7, 11) et un circuit électronique d'exploitation (2, 2'), l'élément de capteur (1, 1') et le circuit d'exploitation (2, 2') étant disposés sur une structure portante (10, 10') au moins partiellement conductrice électriquement, l'élément de capteur (1, 1') magnétorésistif possédant deux directions magnétiques préférentielles (X, Y) orthogonales entre elles, et dans une direction préférentielle une composante de champ magnétique permanent étant provoquée par l'aimant de précontrainte (7, 11), **caractérisé en ce que** le transducteur de valeur de mesure (8) comporte des zones (9) magnétiques permanentes se succédant dans la direction de rotation (direction Y) de polarité alternée (N/S), et **en ce que** l'élément de capteur (1, 1') est disposé et l'élément de précontrainte est magnétisé de manière que l'aimant de précontrainte (7, 11) produise un champ magnétique qui est orienté perpendiculairement à la direction de déplacement (direction Y) du transducteur de valeur de mesure (8) dans une direction préférentielle (direction X) de l'élément de capteur (1, 1'), et **en ce que** pendant un mouvement de rotation du transducteur de valeur de mesure (8), les zones magnétiques (9) provoquent, dans une direction préférentielle de l'élément de capteur (direction Y), qui est sensiblement orthogonale à la composante de champ magnétique produite par l'aimant de précontrainte (7, 11), un gradient variable de l'intensité de champ entre les zones magnétiques permanentes (9) voisines, qui traverse l'élément de capteur (1, 1') dans la direction de rotation (direction Y) et traduit le mouvement de rotation.

2. Capteur pour roue de véhicule automobile selon la revendication 1, **caractérisé en ce que** le transducteur de valeur de mesure (8) est réalisé sous la forme d'un disque sur la périphérie duquel les zones magnétiques permanentes (9) sont régulièrement réparties.

3. Capteur pour roue de véhicule automobile selon la revendication 2, **caractérisé en ce que** les zones magnétiques permanentes (9) sont disposées dans le plan de rotation du disque et le capteur de valeur de mesure (14, 15, 16) est orienté parallèlement au disque.

4. Capteur pour roue de véhicule automobile selon la revendication 2, **caractérisé en ce que** les zones magnétiques permanentes (9) sont disposées sur le pourtour du disque et le capteur de valeur de mesure sur la périphérie est orienté parallèlement à l'axe.

5. Capteur pour roue de véhicule automobile selon une ou plusieurs des revendications 1 à 4, **caractérisé en ce que** les zones magnétiques permanentes (9) sont réalisées par le fait que des corps magnétiques sont noyés dans un matériau de support mécanique (17) ou par magnétisation de zones (9) d'un support.

6. Capteur pour roue de véhicule automobile selon l'une des revendications 1 à 5, **caractérisé en ce que** le capteur de valeur de mesure (14, 15) est réalisé sous la forme d'un élément de base à deux boîtiers et **en ce que** l'aimant de précontrainte (7), servant à produire la composante de champ dans la direction X, est disposé à l'extérieur d'un boîtier (5) de l'élément de capteur (1) magnétorésistif.

7. Capteur pour roue de véhicule automobile selon une ou plusieurs des revendications 1 à 5, **caractérisé en ce que** le capteur de valeur de mesure (16) est réalisé sous la forme d'un élément de base à un boîtier et **en ce que** l'aimant de précontrainte est disposé à l'extérieur du boîtier, sur le côté de ce boîtier opposé au transducteur de valeur de mesure (8).

8. Capteur pour roue de véhicule automobile selon une ou plusieurs des revendications 1 à 5, **caractérisé en ce que** le capteur de valeur de mesure (14) est réalisé sous la forme d'un élément de base à deux boîtiers et **en ce que** l'élément de précontrainte (11) est disposé à l'intérieur du boîtier (5') de l'élément de capteur (1) magnétorésistif.

9. Capteur pour roue de véhicule automobile selon une ou plusieurs des revendications 1 à 5, **caractérisé en ce que** le capteur de valeur de mesure (16) est réalisé sous la forme d'un élément de base (12) à un boîtier et **en ce que** l'aimant de précontrainte (11) est disposé à l'intérieur de l'élément de base (12).

10. Capteur pour roue de véhicule automobile selon une ou plusieurs des revendications 1 à 9, **caractérisé en ce que** l'aimant de précontrainte (7, 11) servant à produire la composante de champ dans la direction X est disposé à l'intérieur ou à l'extérieur du boîtier par rapport à l'élément de capteur (1, 1') magnétorésistif, sur le côté tourné à l'opposé du transducteur de valeur de mesure (8).

11. Capteur pour roue de véhicule automobile selon une ou plusieurs des revendications 1 à 10, **caractérisé en ce que** celui-ci est réalisé sous la forme d'un capteur de palier de roue.

12. Capteur pour roue de véhicule automobile selon la revendication 11, **caractérisé en ce que** le transducteur de valeur de mesure (8) est réalisé par incorporation de zones magnétiques permanentes (9) dans une bague d'étanchéité de palier de roue ou par magnétisation de zones (9) correspondantes.
